# FASCICULE DE BREVET EUROPEEN

(11) **EP 2 941 521 B1**
(45) Date de publication et mention de la délivrance du brevet: **14.02.2018**
(21) Numéro de dépôt: 13814951.3
(22) Date de dépôt: 20.12.2013
(51) Int. Cl.: E06B 9/68, H02G 3/38

(54) **ELEMENT DE FAÇADE, BATIMENT COMPRENANT UN TEL ELEMENT ET PROCEDE DE MONTAGE D'UNE FAÇADE DE BATIMENT**
FASSADENELEMENT, GEBÄUDE MIT SOLCHEM ELEMENT UND VERFAHREN ZUR MONTAGE EINER GEBÄUDEFASSADE
FAÇADE ELEMENT, BUILDING COMPRISING SUCH AN ELEMENT AND METHOD FOR MOUNTING A BUILDING FAÇADE

(30) Priorité: 31.12.2012 FR 1262982
(43) Date de publication de la demande: 11.11.2015
(73) Titulaire: SOMFY ACTIVITES SA, 74300 Cluses (FR)
(72) Inventeur: STAHL, Oliver, 72108 Rottenburg (DE); PELLARIN, Florent, 74960 Meythet (FR)
(74) Mandataire: Lavoix
(86) Numéro de dépôt international: PCT/EP2013/077743
(87) Numéro de publication internationale: WO 2014/102198

(56) Documents cités:
- EP-A1- 2 166 189
- DE-A1-102006 055 789
- FR-A1- 2 557 397

## Description

### Domaine de l'invention :

L'invention concerne un élément de façade pour un bâtiment, ainsi qu'un bâtiment comprenant, entre autres, un tel élément de façade. L'invention concerne également un procédé de montage d'une façade de bâtiment. L'invention trouve une application particulière dans le cadre d'un bâtiment intelligent possédant un réseau d'alimentation et de données pour commander des actionneurs.

### Etat de la technique :

Il est connu de EP-A-2 166 189 de raccorder un équipement électrique intégré à un élément de façade à un réseau d'alimentation en courant, au moyen de câbles insérés dans l'élément de façade et de connecteurs qui permettent la liaison entre les différents éléments de façade et les équipements. Cependant, les problèmes qualité qui peuvent intervenir lors de l'installation des éléments de façades ne résultent pas essentiellement d'un problème de câblage, mais sont plutôt liés à une installation incorrecte des moyens de contrôle des équipements électriques et de leurs connexions.

### Invention proposée :

L'invention vise à améliorer la fiabilité d'installation des éléments constitutifs de la façade d'un bâtiment, tout en facilitant le travail des opérateurs.

A cet effet, l'invention concerne un élément de façade pour bâtiment qui comporte au moins un équipement électrique, ainsi qu'un dispositif de contrôle de cet élément électrique comprenant une platine spécifique avec au moins un jeu de prises d'alimentation en courant, des moyens d'alimentation de ce dispositif de contrôle en courant électrique à travers les prises d'alimentation et des moyens de raccordement de ce dispositif de contrôle à un réseau de communication à travers des prises de liaison au BUS de données, ou à travers les prises d'alimentation, ou par le biais d'une communication radio au moyen d'une antenne.

Grâce à l'invention le dispositif de contrôle permet, entre autres, de piloter directement le ou les équipements électriques qui sont installés sur l'élément de façade. L'élément de façade devient ainsi un élément intelligent qui peut être autonome, par exemple avec ses actionneurs et ses capteurs. L'élément de façade peut également devenir un élément connecté à une intelligence centrale et qui peut toujours répondre à une stratégie fonctionnelle du bâtiment dans sa globalité. Le ou les équipements électriques peuvent être de type protection solaire, par exemple un actionneur électrique de store enroulable, store vénitien, vitrage électrochrome etc, ou bien des dispositifs de climatisation, d'éclairage, de détection ou analogues. L'invention est tout particulièrement destinée aux éléments de façade qui sont utilisés pour la fabrication de bâtiments tertiaires.

Selon des aspects avantageux mais non obligatoires de l'invention, un tel élément de façade peut incorporer une ou plusieurs des caractéristiques suivantes, prises dans toute combinaison techniquement admissible :
- L'élément de façade comporte plusieurs équipements électriques distincts, alors que le dispositif de contrôle commande chaque équipement électrique par une liaison de commande.
- Le dispositif de contrôle est l'élément fonctionnel central de l'élément de façade, connecté à un réseau d'alimentation électrique et à un réseau de communication par des liaisons et à chaque équipement électrique par une liaison de commande dédiée.
- Les moyens d'alimentation comprennent au moins un connecteur de branchement à un réseau d'alimentation du dispositif de contrôle en courant électrique.
- Les moyens de raccordement comprennent au moins un connecteur de branchement à un réseau de communication.
- Le connecteur de branchement au réseau d'alimentation et le connecteur de branchement au réseau de communication sont intégrés dans un même boîtier de connexion qui comprend, de préférence, une entrée et une sortie pour le réseau d'alimentation et une entrée et une sortie pour le réseau de communication.
- Le dispositif de contrôle est connecté en série entre les boitiers de connexion.
- L'équipement électrique est un actionneur électrique de store motorisé, un point de commande, un capteur ou une lampe.
- L'élément comprend des moyens de détermination, de l'emplacement occupé par l'élément sur une façade. Ces moyens de détermination de l'emplacement occupé fonctionnent avantageusement en mesurant un paramètre physique qui dépend de la position de cet élément sur une façade. On peut, en outre, prévoir que ces moyens comprennent un composant électronique dont l'impédance peut être détectée par le dispositif de contrôle raccordé à un réseau.

L'invention concerne également un bâtiment comprenant une structure qui définit des emplacements dans lesquels sont montés des éléments de façade tels que décrits ci-dessus.

Enfin, l'invention concerne un procédé de montage d'une façade de bâtiment qui peut être mis en oeuvre avec un élément de façade tel que mentionné ci-dessus et, plus spécifiquement, un procédé de montage d'une façade d'un bâtiment qui comporte une structure définissant des emplacements, ainsi que plusieurs éléments de façade dont certains au moins comportent au moins un équipement électrique. Dans ce procédé, les éléments de façade sont mis en place et immobilisés dans les emplacements et il est prévu une étape a) consistant à raccorder à un réseau de communication un dispositif de contrôle intégré à l'un au moins des éléments de façade, lequel élément comporte au moins un équipement électrique contrôlé par ce dispositif, au moyen de prises d'alimentation ou de prises de liaison d'une platine spécifique du dispositif de contrôle ou par le biais d'une communication radio au moyen d'une antenne.

De façon avantageuse, un tel procédé peut incorporer l'un ou l'autre des étapes supplémentaires suivantes, consistant à :
b) raccorder le dispositif de contrôle à un réseau d'alimentation en courant électrique
c) déterminer l'emplacement occupé par un élément de façade en procédant à une mesure d'un paramètre physique dépendant de la position de cet élément sur la façade.

### Description des dessins :

L'invention sera mieux comprise et d'autres avantages de celle-ci apparaîtront plus clairement à la lecture de la description qui va suivre, donnée uniquement à titre d'exemple et fait en se référant aux dessins annexés dans lesquels :
- la figure 1 est une représentation schématique en perspective d'un élément de façade conforme à l'invention vu de l'intérieur ;
- la figure 2 est une coupe verticale de principe selon la ligne II-II à la figure 1, lorsque l'élément de façade est incorporé à un bâtiment ; pour la clarté du dessin, les conducteurs électriques raccordant les équipements électriques de l'élément de façade ne sont pas présentés sur cette figure ;
- la figure 3 est une représentation schématique de principe dune façade d'un bâtiment conforme à l'invention en cours de montage, cette façade incorporant les éléments analogues à celui des figures 1 et 2.

### Description des modes de réalisation :

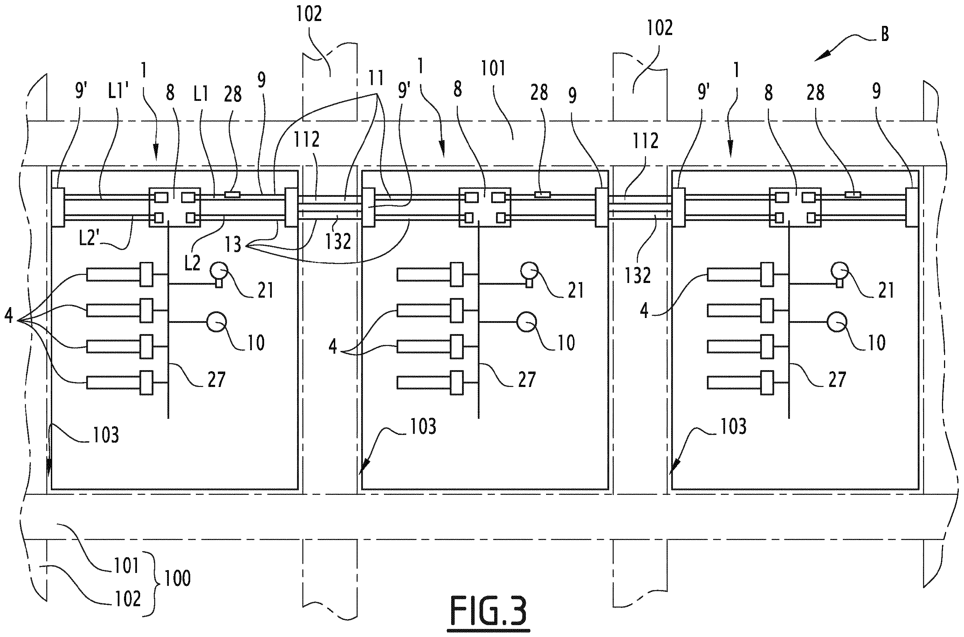

Les bâtiments modernes, tels que celui représenté partiellement à la figure 3 avec la référence B, sont fabriqués à partir d'une structure intérieure 100 sur laquelle on vient apposer des éléments de façade 1 qui constitue la peau extérieure du bâtiment, après montage. La structure 100 est composée de poutres horizontales 101 et de montants verticaux 102 qui sont assemblés par boulonnage ou soudage lorsqu'ils sont métalliques. En variante, les éléments 101 et 102 peuvent être en béton. A la figure 3, les éléments de façade 1 sont représentés à l'intérieur d'emplacement 103 définis verticalement entre deux poutres 101 et horizontalement entre deux montants 102. En variante, les éléments de façade 1 peuvent venir en recouvrement des poutres 101 et des montants 102, en débordant latéralement et verticalement des emplacements 103.

Les éléments de façade 1 sont fabriqués en usine, de façon précise, et référencés également précisément pour permettre leur installation à leur place définitive sur le bâtiment.

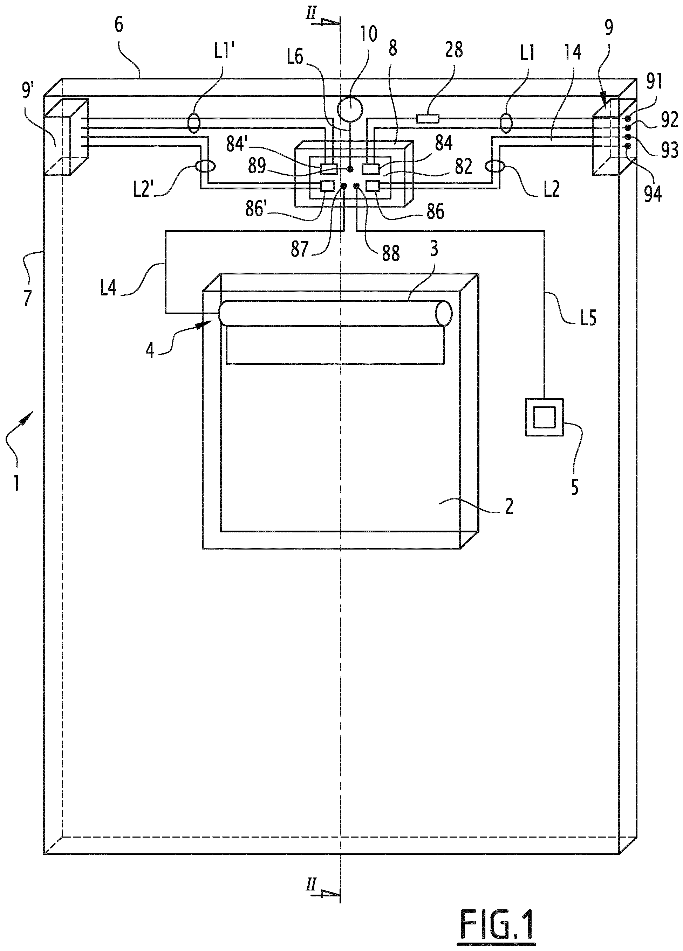

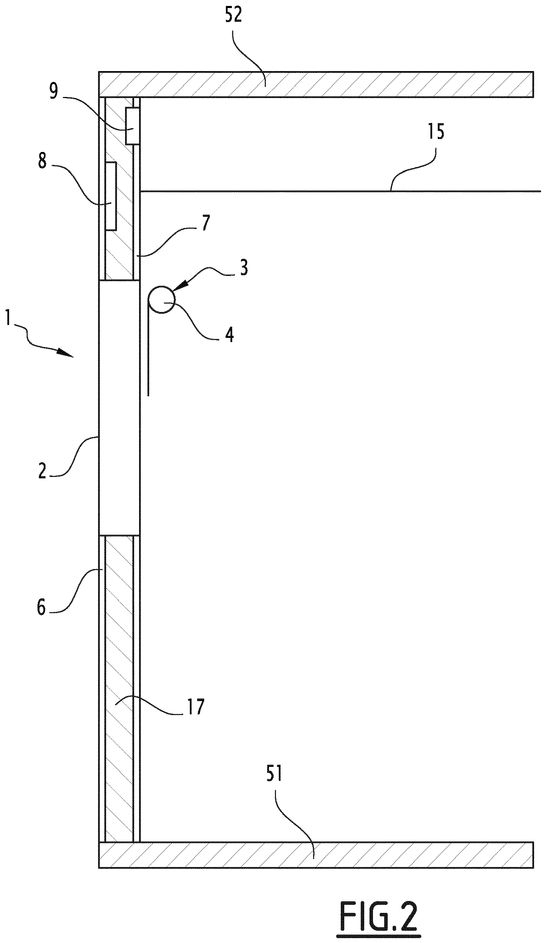

En général, et comme représenté aux figures 1 et 2 les éléments de façade 1 comprennent une zone vitrée 2 permettant de laisser entrer la lumière à l'intérieur du bâtiment B. Un organe 3 de protection solaire est placé devant chaque zone vitrée 2, permettant de réguler la quantité de lumière entrante. Dans l'exemple, l'organe de protection solaire 3 est un store installé à l'intérieur du bâtiment B, dans une pièce 50 définie entre un plancher 51 et une dalle supérieure 52. En variante, le store 3 peut être placé à l'extérieur du bâtiment B. Alternativement, les deux types de store sont installés de part et d'autre du vitrage. Le store 3 est motorisé à l'aide d'un actionneur électrique 4 qui permet son mouvement par enroulement autour d'un arbre disposé horizontalement en partie haute de la zone 2.

Un ou plusieurs points de commande 5 sont placés sur l'élément de façade 1. Ces points de commande 5 sont à disposition des utilisateurs finaux pour commander le mouvement du store 3. A la figure 1, un seul point de commande 5 est visible, sous la forme d'un interrupteur basculant. Alternativement, il peut ne pas y avoir de point de commande 5 fixé sur l'élément de façade 1 si l'actionneur 4 est équipé d'un récepteur radio. Dans ce cas, les points de commande 5 sont des télécommandes.

L'élément de façade 1 comprend également un capteur 10 qui constitue un équipement électrique supplémentaire. Il peut s'agir d'un capteur de température ou d'un capteur appartenant, par exemple, à un système d'alarme anti-incendie ou anti-intrusion.

En variante, l'élément de façade 1 peut être équipé d'autres équipements électriques qui ne sont pas représentés sur les figures 1 et 2 et qui peuvent comprendre un ou plusieurs luminaires, une ou plusieurs unités de climatisation ou tout autres éléments électriques compatibles avec une commande centralisée. Ainsi, la figure 3 représente le cas où chaque élément de façade 1 est équipé de quatre actionneurs 4, correspondant à quatre fenêtres non visibles sur cette figure, d'une lampe 21 et d'un capteur de température 10. Les éléments de façade 1 représentés à la figure 3 sont d'un type différent de celui des figures 1 et 2 mais sont bâtis sur le même principe.

En variante, non représenté, un élément de façade 1 peut comprendre d'autres équipements électriques, tels que, par exemple, un sous-ensemble de chauffage-climatisation.

Chaque élément de façade 1 est formé d'une paroi extérieure 6, qui constitue la peau apparente du bâtiment B une fois la façade montée, et d'une paroi intérieure 7 qui fait office de cloison intérieure. Entre les deux, il existe un espace dans lequel est placé un matériau d'isolation 17, ainsi qu'au moins un dispositif 8 de contrôle de l'actionneur 4 et des autres équipements électriques éventuellement montés sur l'élément de façade 1.

Ainsi, en usine, il est possible de monter par avance, au moins dans certains éléments de façade 1, un certains nombre de dispositifs de contrôle 8 qui sont traditionnellement mis en place dans le bâtiment B une fois que tous le gros oeuvre est terminé. Cette possibilité de réaliser des opérations de montage supplémentaires en usine est un gage de qualité et de rapidité. En effet, les personnes intervenant en usine sur les éléments de façade 1 sont qualifiées pour le type de dispositif de contrôle 8 à installer. Il est également possible de les tester et donc d'éviter tout mauvais fonctionnement à la mise en marche de l'installation une fois sur site.

Lorsque les éléments de façade 1 sont en place ils doivent être connectés à deux types de réseau : l'alimentation électrique et un BUS de données. Par ailleurs, il faut connecter les éléments de façade entre eux pour constituer un réseau d'équipements électriques et de dispositifs de contrôle 8. Chaque élément de façade 1 est donc pourvu d'au moins un boîtier de raccordement 9. En pratique deux boîtiers 9 et 9' sont placés sur chaque élément de façade 1, un à droite et un à gauche vu de l'intérieur. Si l'on souhaite connecter certains éléments de façade 1 avec d'autres placés au dessus ou au dessous d'eux, il est possible de prévoir des boîtiers de connexion 9 placés également en haut en bas de l'élément de façade.

Préférentiellement chaque boîtier 9 comporte deux connecteurs 91 et 92 de raccordement à un réseau 11 d'alimentation électrique fournissant un courant électrique sous une tension de 230V à 50Hz ou sous d'autres gammes de tension et de fréquence, en fonction du pays d'installation. Le boîtier de connexion 9 comprend également deux connecteurs 93 et 94 de raccordement à un BUS de données 13 qui forme un réseau de communication du bâtiment B. Le BUS de données 13 peut être programmé sur la base du protocole Konnex, ou KNX, ou de tout autre protocole de communication utilisé dans le bâtiment B.

Le dispositif de contrôle 8 est placé dans un emplacement dédié dans l'élément de façade. Un trou est prévu dans l'une des deux parois 6 et 7 pour permettre la mise en place et la fixation du dispositif de contrôle. Le dispositif de contrôle 8 comprend une platine spécifique 82 avec un jeu de prises 84 permettant de l'alimenter en courant et un jeu de prises 86 permettant de le relier au BUS de données 13. Aux moins deux emplacements sont prévus sur la platine 82 pour disposer des prises, de préférence femelles, permettant la connexion de câbles. A minima ce sont des prises 84 d'alimentation électrique. En effet, il est possible de faire communiquer le dispositif de contrôle 8 par le biais du courant porteur dans le réseau 11 ou par le biais d'une communication radio au moyen d'une antenne non représentée. Néanmoins, la platine 82 utilisée de façon préférentielle comprend au moins quatre emplacements pour disposer deux prises 84 pour l'alimentation électrique et deux prises 86 pour le raccordement au BUS de données 13.

A l'intérieur de l'élément de façade 1, une liaison filaire biconducteurs L1 relie les connecteurs 91 et 92 aux prises 84, alors qu'une autre liaison filaire biconducteurs L2 relie les connecteurs 93 et 94 aux prises 86. Les liaisons L1 et L2 prolongent respectivement les réseaux 11 et 13 au sein de l'élément de façade 1.

Les prises femelles 84 et 86 sont, de préférence, différentes entre celles prévues pour l'alimentation électrique et celles prévues pour le raccordement au BUS de données. En effet, il est préférable d'avoir un système de détrompage qui évite une erreur de câblage lors de l'installation d'un élément de façade 1 dans le bâtiment B. De la même manière, un détrompage peut être prévu entre les entrées et les sorties des réseaux 11 et 13. En d'autres termes, les connecteurs 91 et 92 peuvent avoir des formes différentes, de même que les connecteurs 93 et 94. Cette configuration facilite la fabrication de ces éléments de façade et leur montage sur le site de construction du bâtiment B.

Le dispositif de contrôle 8 comprend également deux autres jeux de prise 84' et 86' respectivement raccordées, par deux liaisons filaires biconducteurs L1' et L2', à des connecteurs non représentés appartenant au boîtier 9' et respectivement analogues aux connecteurs 91 à 94. Les liaisons L1' et L2' prolongent respectivement les réseaux 11 et 12 au sein de l'élément de façade 1.

Il est ainsi possible d'insérer l'élément de façade en série dans les réseaux 11 et 13, entre les boîtiers de connexion 9 et 9'.

Les alimentations arrivent d'un des boîtiers 9 ou 9' vers les prises d'entrées situées sur la platine 82, et repartent vers l'autre boîtier 9 ou 9' à partir des prises de sorties situées également sur la platine. Les deux boîtiers de connexion 9 et 9' sont donc reliés entre eux via le dispositif de contrôle 8.

Alternativement, les deux boîtiers de connexion 9 et 9' sont reliés directement et le dispositif de contrôle 8 est relié au réseau d'alimentation 11 et au BUS 13 en dérivation.

Selon une variante non représentée de l'invention, plusieurs dispositifs de contrôle 8 peuvent être intégrés à un élément de façade 1, chacun dédié au pilotage d'un type d'équipement électriques. En effet, dans certains cas les protocoles de communication sont propriétaires et il faut utiliser un dispositif de contrôle compatible avec chaque périphérique ou équipement électrique monté sur l'élément 1. Dans ce cas, les différents dispositifs de contrôle présents dans l'élément de façade peuvent être reliés en série.

L'architecture privilégiée est celle où un seul dispositif de contrôle 8 est installé dans l'élément de façade 1 et connecté en série entre les deux boîtiers de connexion 9 et 9'.

Le dispositif de contrôle 8 est relié à l'actionneur 4 et à l'interrupteur 5 par deux liaisons filaires L4 et L5, qui peuvent être mono ou pluri-conducteurs, et qui sont respectivement raccordées sur des prises 87 et 88 de la platine 82. L'actionneur 4 est alimenté électriquement à partir du réseau 11 à travers le dispositif de contrôle 8. Ainsi, le dispositif de contrôle 8 permet de commander le fonctionnement de l'actionneur 4 à travers la liaison L4.

Le dispositif de contrôle 8 est relié au capteur 10 par une liaison filaire L6 mono ou pluri-conducteurs, qui est raccordée sur une prise 89 de la platine 82.

Le dispositif de contrôle 8 est l'élément fonctionnel central de l'élément de façade 1. En effet, c'est lui qui est relié aux réseaux 11 et 13 et également lui qui est relié aux actionneurs 4 de tous types, ainsi qu'aux autres équipements électriques 5 et 10, voire 21, de l'élément de façade 1.

La liaison entre le dispositif de contrôle 8 et les actionneurs 4, les équipements 5, 10 ou 21 ou les capteurs peut se faire par un BUS de transfert de données, comme par exemple un BUS RS485. Ce genre de BUS peut supporter un grand nombre de périphériques. Pour un BUS RS485 ce peut être jusqu'à 255 périphériques.

Une autre solution peut être de prévoir différents types de prises sur le dispositif de contrôle 8 qui permettent de relier, de préférence à partir de la platine 82, le dispositif de commande à tous les périphériques présents dans l'élément de façade. Cette solution, qui est représentée à la figure 1 avec les liaisons L4 et L5, est privilégiée quand les différents équipements électriques ne sont pas compatibles entre eux en terme de protocole.

La solution avec BUS de transfert de données est, quant à elle, représentée à la figure 3, avec un BUS 27 reliant les équipements 4, 10 et 21 au dispositif de contrôle 8 dans chaque éléments de façade 1.

Le dispositif de contrôle 8 peut servir de traducteur entre plusieurs protocoles. En particulier, le bâtiment B peut utiliser un protocole de communication, comme Konnex ou KNX par exemple, et devoir traduire les ordres entrants codés selon ce protocole en un autre protocole compatible avec les actionneurs 4. Par exemple, ce deuxième protocole peut être du type RS485. Par ailleurs, le dispositif de contrôle 8 peut être pourvu de plusieurs protocoles différents en mémoire et être capable de commander ou de recevoir des informations de plusieurs périphériques en principe incompatibles entre eux.

Dans les exemples illustrés les réseaux et les liaisons sont filaires, mais le dispositif de contrôle 8 peut être pourvu de moyens radio, c'est-à-dire une antenne et des moyen de réception et d'émission non représentés, capables d'envoyer et/ou de recevoir des trames radios vers ou depuis les périphériques, c'est-à-dire les équipements électriques, ou vers ou depuis un contrôleur central.

Fonctionnellement, avoir un dispositif de contrôle 8 dans un élément de façade 1 permet d'obtenir un asservissement du niveau lumineux, de la température ou de tout autre paramètre complètement autonome au niveau de la pièce 50 attenante à l'élément de façade 1. Ceci est particulièrement avantageux comparé à une gestion totalement centralisée de ces paramètres, car les valeurs utilisées sont bien celles de l'environnement de la pièce.

Une fois en place, les éléments de façade 1 sont reliés entre eux, comme représenté schématiquement à la figure 3. Ils constituent les réseaux d'alimentation 11 et de BUS de données 13 avec des parties 112 et 132 de ces réseaux qui les relient entre eux, comme représenté au niveau des montants 102 à la figure 3.

Chaque dispositif de contrôle 8 peut avoir un fonctionnement autonome mais aussi répondre à des ordres d'un contrôleur central qui peut décider par exemple de mettre tout ou partie du bâtiment en mode d'économie d'énergie. Ce genre de scénario peut être mis en oeuvre en dehors des heures classiques de bureau, de sorte que chaque utilisateur peut bénéficier d'un confort accru durant ses heures de présence, en ayant une gestion locale, et que le bâtiment consomme un minimum d'énergie lorsque les utilisateurs sont absents.

Les éléments de façade 1 sont connectés très facilement entre eux une fois en place sur la structure 100 du bâtiment. En effet, il suffit de relier les connecteurs 9 entre eux avec des câbles 112 et 132 munis des connecteurs maies ou femelles correspondant aux connecteurs 91 à 94.

En variante, les boîtiers 9 et 9' de deux éléments de façade 1 adjacents sont reliés directement entre eux. Dans ce cas, on peut prévoir que les connecteurs 91 à 94 d'un des boîtiers sont mâles, alors que les connecteurs de l'autre boîtier sont femelles.

A la mise en route des réseaux 11 et 13, le contrôleur central procède à une phase de reconnaissance des différents équipements présents qui peuvent se déclarer par le biais du BUS de données 13. Il est possible de savoir quel équipement est disposé à quel endroit du bâtiment. En effet, le plan du bâtiment B est connu, notamment la position des emplacements 103, et les atténuations de signal inévitables sur le réseau 13 peuvent être mesurées et permettre au contrôleur central d'en déduire quelle est la position relative de chaque dispositif de contrôle 8.

Pour réaliser cette opération les associations fenêtres 2, actionneurs 4, et dispositifs de contrôle 8 sont référencées précisément et enregistrées dans le contrôleur central à l'avance. Il convient donc, lors de la fabrication de chaque élément de façade 1, de bien l'associer avec les actionneurs 4 et autres équipements électriques 5, 10 ou 21 ayant les bonnes références.

Avec un dispositif de contrôle 8 dans chaque élément de façade 1, il est également possible de référencer la position de chacun de ces dispositifs de contrôle 8 par rapport à ses voisins et donc de reconstituer la carte exacte du bâtiment. Dans ce cas, il n'est plus important de garantir l'association de chaque élément de façade 1 avec les actionneurs 4 ou les équipements 5, 10 ou 21 ayant les références déclarées au préalable. Chaque dispositif de contrôle 8 est capable d'envoyer au contrôleur central ses coordonnées et les références de chaque actionneur ou autre équipement électrique présent à son niveau, c'est-à-dire sur l'élément 1 auquel il appartient.

Une méthode pour permettre à chaque dispositif de contrôle 8 de savoir où il est placé consiste à ajouter une résistance 28 dans chaque élément de façade 1 sur un fil particulier, par exemple un fil de la liaison L1. Ainsi chaque dispositif de contrôle peut mesurer l'impédance du réseau 11 à son niveau par rapport à un point de référence. Cette valeur lui indique sa position relative par rapport au point de référence, au niveau d'un étage par exemple. Concrètement, si l'on dispose d'une résistance 28 de 10 Ohms dans chaque élément de façade 1, entre son dispositif de contrôle 8 et son boîtier 9, le dispositif de contrôle 8 du premier élément de façade dans la rangée lira une valeur de 10 Ohms, le deuxième une valeur de 20 Ohms, etc...

Un bâtiment B pouvant avoir plusieurs étages, il est possible d'utiliser le même principe entre chaque élément de façade 1 en tête de ligne de chaque étage. La résistance qui peut relier les éléments de façade les uns au dessus des autres peut être de l'ordre de 1000 Ohms, pour que chaque moyen de contrôle puisse connaître l'étage où il est placé. Ceci n'est pas représenté sur les figures.

Il suffit alors de référencer correctement le premier élément de façade 1 au niveau du contrôleur central pour que chaque dispositif de contrôle 8 puisse déclarer sa position relative au contrôleur central. Ceci permet de réaliser une cartographie complète du bâtiment B.

L'impédance du réseau 11 vu d'un dispositif de contrôle 8 peut être mesurée directement, comme envisagé ci-dessus, ou déduite de la mesure d'un autre paramètre physique qui varie, par exemple de façon proportionnelle, en fonction de cette impédance. Cet autre paramètre peut être une tension qui est moins coûteuse à mesurer qu'une impédance car une fonction de mesure de tension est intégrée à pratiquement tous les micro-contrôleurs.

En variante, les résistances 28 ou d'autres composants d'impédance connue peuvent être intégrés aux liaisons L2 ou L2'.

Une autre méthode consiste à utiliser le BUS de données pour que chaque moyen de contrôle demande qui est placé en aval de sa position. En fonction des réponses chaque élément de façade connaît sa position relative. Dans ce cas, il est nécessaire qu'un contrôleur central du bâtiment et/ou chacun des dispositifs de contrôle 8 soit capable de couper le bus de données 13, en amont ou en aval de chaque élément de façade 1, pour que chaque élément de façade communique à cette occasion avec un seul côté du bus de données.

D'un point de vue pratique les boîtiers de connexion 9 et 9' utilisés ne sont pas des pièces esthétiques et doivent donc être cachés. Ils se trouvent donc sur la partie supérieure de l'élément de façade 1 à une hauteur telle qu'ils se trouvent au dessus du plafond 15 de la pièce attenante.

En effet, dans ce type de bâtiment dit « tertiaire » une paroi horizontale est rapportée pour faire office de plafond 15 qui vient se positionner contre l'élément de façade 1 à une distance verticale de l'ordre de cinquante centimètres en dessous de la dalle supérieure 52 de l'étage du bâtiment. Ce type de faux-plafond est déjà utilisé dans les bâtiments actuels et l'espace généré permet de placer des éléments techniques tels que des luminaires, des unités de climatisation, des moyens de contrôles des actionneurs de protection solaire et d'autres câblage et tubulures.

Lorsqu'il convient de procéder au montage de la façade d'un bâtiment tel que le bâtiment B représenté partiellement à la figure 3 et qui comprend la structure 100, on met en place et on immobilise un élément de façade 1 dans chacun des emplacements 103. Cette mise en place peut être réalisée avec une grue et des moyens d'immobilisation classique sont utilisés, tels que des pitons de scellement. Lorsqu'un élément de façade 1 est dans son emplacement 103, on le raccorde au réseau d'alimentation 11 et au réseau communication, dont le BUS de données 13 en branchant des éléments conducteur bifilaire 112 et 132 sur les connecteurs 91 et 92, d'une part, 93 et 94, d'autre part. Ceci permet d'alimenter le dispositif 8 de chaque élément de façade 1 en courant électrique, ce qui lui permet de communiquer avec les autres dispositifs de contrôle 8 des autres éléments de façade 1 et avec un contrôleur central, à travers le réseau de communication.

Lorsque différents éléments de façade 1 sont en place dans des emplacements 1, il est possible à chaque dispositif de contrôle 8 de mesurer l'impédance du réseau 11 par rapport à un point de référence, par exemple le boîtier de raccordement 9 de l'élément de façade 1 situé le plus à droite sur une rangée d'éléments de façade correspondant à un étage du bâtiment B. Dans ce cas, le dispositif de contrôle 8 de ce premier élément de façade mesure une impédance du réseau 11 correspondant à la valeur de la résistance 28 de cet élément de façade, soit 10 Ohms, alors que le dispositif de contrôle 8 du deuxième élément de façade en partant de la droite mesure une impédance égale à la somme des valeurs des résistances 28 des deux premiers éléments de façade, c'est-à-dire 20 Ohms. Ainsi, l'emplacement 103 occupé par un élément de façade 1 peut être déterminé en mesurant l'impédance du réseau d'alimentation 11 entre un dispositif de contrôle 8 et un boîtier 9, cette impédance dépendant de la position de chaque élément 1 sur la façade du bâtiment B.

Cette mesure d'impédance est réalisée par les dispositifs 8 qui intègrent chacun des moyens de calculs, tels qu'un microcontrôleur ou équivalent.

Comme mentionné ci-dessus, cette méthode peut également être mise en oeuvre pour déterminer l'étage auquel est installé un élément de façade 1.

On relève que, lorsque le dispositif de contrôle 8 est équipé de moyens de communication radio, le raccordement au réseau de communication 13 peut avoir lieu de façon non filaire. Les moyens de raccordement au réseau de communication 13 sont alors adaptés, par exemple sous la forme d'émetteurs-récepteurs radio.

De façon générale, le dispositif de contrôle 8 commande les équipements 4, 10 et/ou 21 en adaptant/interprétant des consignes reçues à travers le réseau de communication 13.

L'invention est décrite ci-dessus dans le cas où chaque dispositif de contrôle 8 est alimenté en courant électrique à partir du réseau 11 qui parcourt différents éléments de façade 1 d'un bâtiment. Selon une variante non représentée de l'invention, chaque élément de façade est équipé d'une batterie, éventuellement rechargeable grâce à une cellule photovoltaïque placée sur sa paroi extérieure 6, qui alimente le dispositif 8 et les équipements qu'il contrôle. Ceci est particulièrement avantageux lorsque les équipements contrôlés par le dispositif 8 consomment peu d'énergie, comme des capteurs. Dans ce cas, la batterie constitue un moyen autonome d'alimentation du dispositif de contrôle 8 en courant électrique.

Dans ce cas où une batterie alimente le dispositif de contrôle 8 de façon autonome, il n'est pas obligatoire, lors du montage de la façade du bâtiment B, de raccorder chaque dispositif de contrôle 8 au réseau d'alimentation en courant électrique. En revanche, il reste nécessaire de raccorder chaque dispositif de contrôle 8 au réseau de communication 13, que ce soit de façon filaire ou non filaire.

Dans la représentation de la figure 3, les différents éléments de façade 1 sont identiques. En pratique, le type et le nombre d'équipements électrique de chaque élément de façade peuvent être adaptés, d'une part, à la nature de la pièce qu'ils vont délimiter, et d'autre part, à leur emplacement sur le bâtiment B. En outre, il n'est pas obligatoire que tous les éléments de façade 1 du bâtiment B soient équipés d'un dispositif de contrôle 8.

L'invention est représentée dans le cas où l'élément de façade est de type "simple peau". Elle est toutefois applicable au cas où il s'agit d'un élément "double peau" et au cas où deux éléments simple peau sont disposés l'un derrière l'autre.

Selon une variante non représentée de l'invention, le dispositif de contrôle 8 d'un élément de façade 1 peut commander des équipements électriques extérieurs à cet élément de façade, par exemple un sous-ensemble de chauffage ou de climatisation, dit HVAC (pour Heat Ventilation Air Conditionning) ou une lampe d'éclairage.

Les caractéristiques techniques des modes de réalisation et variantes envisagés ci-dessus peuvent être combinées entre elles pour créer de nouveaux modes de réalisation.

## Revendications

1. Elément de façade (1) pour bâtiment (B), cet élément de façade comportant au moins un équipement électrique (4, 5, 10, 21) un dispositif (8) de contrôle de l'équipement électrique et des moyens (9, 9', 93, 94, L2, L2') de raccordement du dispositif de contrôle (8) à un réseau de communication (13), **caractérisé en ce que** :
- le dispositif de contrôle (8) comprend une platine spécifique (82) avec au moins un jeu de prises d'alimentation (84) en courant
- l'élément de façade (1) comprend des moyens (9, 9', 91-92, L1, L1') d'alimentation du dispositif de contrôle en courant électrique à travers les prises d'alimentation (84) et
- le raccordement du dispositif de contrôle (8) au réseau de communication (13) a lieu à travers des prises (86) de liaison de ladite platine spécifique (82) au réseau de communication (13), ou à travers les prises d'alimentation (84), ou par le biais d'une communication radio au moyen d'une antenne.

2. Elément de façade selon la revendication 1, **caractérisé en ce qu'**il comporte plusieurs équipements électriques distincts (4, 10, 21) et **en ce que** le dispositif de contrôle (8) commande chaque équipement électrique par une liaison de commande (L4, L6 ; 27).

3. Elément de façade selon l'une des revendications précédentes, **caractérisé en ce que** le dispositif de contrôle (8) est l'élément fonctionnel central de l'élément de façade (1), connecté à un réseau (11) d'alimentation électrique et à un réseau (13) de communication par des liaisons (L1, L2) et à chaque équipement électrique (4, 5, 10, 21) par une liaison de commande dédiée (L4, L5, L6 ; 27).

4. Elément de façade selon l'une des revendications précédentes, **caractérisé en ce que** les moyens d'alimentation comprennent au moins un connecteur (91, 92) de branchement à un réseau (11) d'alimentation du dispositif de contrôle (8) en courant électrique.

5. Elément de façade selon l'une des revendications précédentes, **caractérisé en ce que** les moyens de raccordement comprennent au moins un connecteur (93, 94) de branchement à un réseau de communication (13).

6. Elément de façade selon les revendications 4 et 5, **caractérisé en ce que** le connecteur (91, 92) de branchement au réseau d'alimentation (11) et le connecteur (93, 94) de branchement au réseau de communication (13) sont intégrés dans un même boîtier (9, 9') de connexion.

7. Elément de façade selon la revendication 6, **caractérisé en ce que** le dispositif de contrôle (8) est connecté en série entre les boitiers (9, 9') de connexion.

8. Elément de façade selon l'une des revendications précédentes, **caractérisé en ce que** l'équipement électrique est un actionneur électrique (4) de store motorisé (3), un point de commande (5), un capteur (10) ou une lampe (21).

9. Elément de façade selon l'une des revendications précédentes, **caractérisé en ce qu'**il comprend des moyens (8, 28) de détermination, de l'emplacement (103) occupé par l'élément sur une façade (1).

10. Elément de façade selon la revendication 9, **caractérisé en ce que** les moyens (8, 28) de détermination de l'emplacement (103) occupé fonctionnent en mesurant un paramètre physique qui dépend de la position de cet élément (1) sur une façade.

11. Elément de façade selon l'une des revendications 9 ou 10, **caractérisé en ce que** les moyens de détermination de l'emplacement occupé (103) comprennent un composant électronique (28) dont l'impédance peut être détectée par le dispositif de commande (8) raccordé à un réseau (11, 13).

12. Bâtiment (B) comprenant une structure (100) définissant des emplacements (103) dans lesquels sont montés des éléments de façade, **caractérisé en ce que** l'un au moins des éléments de façade (1) est selon l'une des revendications précédentes.

13. Procédé de montage d'une façade d'un bâtiment, (B) ce bâtiment comprenant une structure définissant des emplacements (103), ainsi que plusieurs éléments de façade (1), selon l'une des revendications 1 à 11, dont certains au moins comportent au moins un équipement électrique (4, 5, 10, 21), procédé dans lequel lesdits éléments de façade sont mis en place et immobilisés dans les emplacements, **caractérisé en ce que** ce procédé comprend au moins une étape consistant à :
a) raccorder, à un réseau de communication (13), un dispositif de contrôle (8) intégré à l'un au moins des éléments de façade (1) comportant au moins un équipement électrique (4, 5, 10, 21) contrôlé par ce dispositif, au moyen de prises d'alimentation (84) en courant ou de prises de liaison (86) d'une platine spécifique (82) du dispositif de contrôle (8) ou par le biais d'une communication radio au moyen d'une antenne.

14. Procédé selon la revendication 13, **caractérisé en ce qu'**il comprend, une étape supplémentaire consistant à :
b) raccorder le dispositif de contrôle à un réseau (11) d'alimentation en courant électrique.

15. Procédé selon l'une des revendications 13 ou 14, **caractérisé en ce qu'**il comprend une étape supplémentaire consistant à :
c) déterminer l'emplacement occupé par un élément de façade (1) en procédant à une mesure d'un paramètre physique dépendant de la position de cet élément sur la façade.

## Patentansprüche

1. Fassadenelement (1) für ein Gebäude (B), wobei dieses Fassadenelement mindestens ein elektrisches Betriebsmittel (4, 5, 10, 21), eine Steuervorrichtung (8) für das elektrische Betriebsmittel und Einrichtungen (9, 9', 93, 94, L2, L2') zum Anschließen der Steuervorrichtung (8) an ein Kommunikationsnetz (13) aufweist, **dadurch gekennzeichnet, dass**:
- die Steuervorrichtung (8) eine spezifische Platine (82) mit mindestens einem Satz Stromversorgungssteckdosen (84) aufweist,
- das Fassadenelement (1) Einrichtungen (9, 9, 91-92, L1, L1') zur Versorgung der Steuervorrichtung mit elektrischem Strom über die Versorgungssteckdosen (84) aufweist, und
- der Anschluss der Steuervorrichtung (8) an das Kommunikationsnetz (13) über Steckdosen (86) zur Verbindung der spezifischen Platine (82) mit dem Kommunikationsnetz (13) oder über die Versorgungssteckdosen (84) oder anhand einer Funkverbindung mittels einer Antenne stattfindet.

2. Fassadenelement nach Anspruch 1, **dadurch gekennzeichnet, dass** es mehrere eigenständige elektrische Betriebsmittel (4, 10, 21) aufweist, und dass die Steuervorrichtung (8) jedes elektrische Betriebsmittel durch eine Steuerverbindung (L4, L6; 27) steuert.

3. Fassadenelement nach einem der vorhergehenden Ansprüche, **dadurch gekennzeichnet, dass** die Steuervorrichtung (8) das zentrale Funktionselement des Fassadenelements (1) ist, das an ein elektrisches Versorgungsnetz (11) und an ein Kommunikationsnetz (13) über Verbindungen (L1, L2) und an jedes elektrische Betriebsmittel (4, 5, 10, 21) über eine dedizierte Steuerverbindung (L4, L5, L6; 27) angeschlossen ist.

4. Fassadenelement nach einem der vorhergehenden Ansprüche, **dadurch gekennzeichnet, dass** die Versorgungseinrichtungen mindestens einen Stecker (91, 92) zum Anschluss an ein Netz (11) zur Versorgung der Steuervorrichtung (8) mit elektrischem Strom aufweisen.

5. Fassadenelement nach einem der vorhergehenden Ansprüche, **dadurch gekennzeichnet, dass** die Anschlusseinrichtungen mindestens einen Stecker (93, 94) zum Anschluss an ein Kommunikationsnetz (13) aufweisen.

6. Fassadenelement nach den Ansprüchen 4 und 5, **dadurch gekennzeichnet, dass** der Stecker (91, 92) zum Anschluss an das Versorgungsnetz (11) und der Stecker (93, 94) zum Anschluss an das Kommunikationsnetz (13) im selben Anschlussgehäuse (9, 9') integriert sind

7. Fassadenelement nach Anspruch 6, **dadurch gekennzeichnet, dass** die Steuervorrichtung (8) zwischen den Anschlussgehäusen (9, 9') in Reihe geschaltet ist.

8. Fassadenelement nach einem der vorhergehenden Ansprüche, **dadurch gekennzeichnet, dass** das elektrische Betriebsmittel ein elektrischer Stellantrieb (4) für eine motorbetriebene Jalousie (3), ein Kontrollpunkt (5), ein Sensor (10) oder eine Lampe (21) ist.

9. Fassadenelement nach einem der vorhergehenden Ansprüche, **dadurch gekennzeichnet, dass** es Bestimmungseinrichtungen (8, 28) für die vom Element an einer Fassade (1) eingenommene Montagestelle (103) aufweist.

10. Fassadenelement nach Anspruch 9, **dadurch gekennzeichnet, dass** die Bestimmungseinrichtungen (8, 28) für die eingenommene Montagestelle (103) so funktionieren, dass sie einen physischen Parameter messen, der von der Position dieses Elements (1) an einer Fassade abhängt.

11. Fassadenelement nach einem der Ansprüche 9 oder 10, **dadurch gekennzeichnet, dass** die Bestimmungseinrichtungen für die eingenommene Montagestelle (103) ein elektronisches Bauteil (28) aufweisen, dessen Impedanz durch die an ein Netz (11, 13) angeschlossene Steuervorrichtung (8) erfasst werden kann.

12. Gebäude (B) mit einer Struktur (100), die Montagestellen (103) definiert, an denen Fassadenelemente montiert sind, **dadurch gekennzeichnet, dass** mindestens eines der Fassadenelemente (1) nach einem der vorhergehenden Ansprüche vorliegt.

13. Verfahren zur Montage einer Fassade eines Gebäudes (B), wobei dieses Gebäude eine Montagestellen (103) definierende Struktur sowie mehrere Fassadenelemente (1) nach einem der Ansprüche 1 bis 11 aufweist, wovon zumindest einige mindestens ein elektrisches Betriebsmittel (4, 5, 10, 21) aufweisen, wobei bei dem Verfahren die Fassadenelemente in die Montagestellen eingesetzt und dort immobilisiert werden, **dadurch gekennzeichnet, dass** dieses Verfahren mindestens einen Schritt umfasst, der darin besteht:
a) eine Steuervorrichtung (8), die in mindestens eines der Fassadenelemente (1) integriert ist, das mindestens ein von dieser Vorrichtung gesteuertes elektrisches Betriebsmittel (4, 5, 10, 21) aufweist, mittels Stromversorgungssteckdosen (84) oder Verbindungssteckdosen (86) einer spezifischen Platine (82) der Steuervorrichtung (8) oder anhand einer Funkverbindung mittels einer Antenne an ein Kommunikationsnetz (13) anzuschließen.

14. Verfahren nach Anspruch 13, **dadurch gekennzeichnet, dass** es einen zusätzlichen Schritt umfasst, der darin besteht:
b) die Steuervorrichtung an ein elektrisches Stromversorgungsnetz (11) anzuschließen.

15. Verfahren nach einem der Ansprüche 13 oder 14, **dadurch gekennzeichnet, dass** es einen zusätzlichen Schritt umfasst, der darin besteht:
c) die von einem Fassadenelement (1) eingenommene Montagestelle zu bestimmen, indem eine Messung eines physischen Parameters vorgenommen wird, der von der Position dieses Elements an der Fassade abhängt.

## Claims

1. Façade element (1) for a building (B), said façade element comprising at least one piece of electrical equipment (4, 5, 10, 21), a device (8) for controlling the piece of electrical equipment, and means (9, 9', 93, 94, L2, L2') for connection of the control device (8) to a communication network (13), **characterised in that**:
- the control device (8) comprises a specific plate (82) having at least one set of power supply sockets (84),
- the façade element (1) comprises means (9, 9', 91-92, L1, L1') for supplying the control device with electric power *via* the supply sockets (84), and
- connection of the control device (8) to the communication network (13) takes place *via* sockets (86) for connection of said specific plate (82) to the communication network (13) or *via* the supply sockets (84) or by way of radio communication by means of an antenna.

2. Façade element according to claim 1, **characterised in that** it comprises a plurality of separate pieces of electrical equipment (4, 10, 21), and **in that** the control device (8) controls each piece of electrical equipment by a control link (L4, L6; 27).

3. Façade element according to any one of the preceding claims, **characterised in that** the control device (8) is the central functional element of the façade element (1), connected to an electric power supply network (11) and to a communication network (13) by links (L1, L2) and to each piece of electrical equipment (4, 5, 10, 21) by a dedicated control link (L4, L5, L6; 27).

4. Façade element according to any one of the preceding claims, **characterised in that** the power supply means comprise at least one connector (91, 92) for connection to a network (11) for supplying the control device (8) with electric power.

5. Façade element according to any one of the preceding claims, **characterised in that** the connection means comprise at least one connector (93, 94) for connection to a communication network (13).

6. Façade element according to claims 4 and 5, **characterised in that** the connector (91, 92) for connection to the power supply network (11) and the connector (93, 94) for connection to the communication network (13) are integrated in the same connection box (9, 9').

7. Façade element according to claim 6, **characterised in that** the control device (8) is connected in series between the connection boxes (9, 9').

8. Façade element according to any one of the preceding claims, **characterised in that** the piece of electrical equipment is an electrical actuator (4) of a motor-driven blind (3), a control point (5), a sensor (10) or a light (21).

9. Façade element according to any one of the preceding claims, **characterised in that** it comprises means (8, 28) for determining the location (103) occupied by the element on a façade (1).

10. Façade element according to claim 9, **characterised in that** the means (8, 28) for determining the occupied location (103) work by measuring a physical parameter which depends on the position of the element (1) on a façade.

11. Façade element according to either claim 9 or claim 10, **characterised in that** the means for determining the occupied location (103) comprise an electronic component (28) the impedance of which can be detected by the control device (8) connected to a network (11, 13).

12. Building (B) comprising a structure (100) that defines locations (103) in which façade elements are mounted, **characterised in that** at least one of the façade elements (1) is in accordance with any one of the preceding claims.

13. Method for erecting a façade of a building (B), said building comprising a structure that defines locations (103), as well as a plurality of façade elements (1) according to any one of claims 1 to 11, at least some of which comprise at least one piece of electrical equipment (4, 5, 10, 21), in which method said façade elements are positioned and fixed in the locations, **characterised in that** the method comprises at least one step consisting in:
a) connecting a control device (8) integrated into at least one of the façade elements (1) comprising at least one piece of electrical equipment (4, 5, 10, 21) controlled by said device to a communication network (13) by means of power supply sockets (84) or connection sockets (86) of a specific plate (82) of the control device (8) or by way of radio communication by means of an antenna.

14. Method according to claim 13, **characterised in that** it comprises an additional step consisting in:
b) connecting the control device to an electric power supply network (11).

15. Method according to either claim 13 or claim 14, **characterised in that** it comprises an additional step consisting in:
c) determining the location occupied by a façade element (1) by measuring a physical parameter which depends on the position of said element on the façade.
